# EUROPÄISCHE PATENTSCHRIFT

(11) **EP 3 004 195 B1**
(45) Veröffentlichungstag und Bekanntmachung des Hinweises auf die Patenterteilung: **22.02.2017**
(21) Anmeldenummer: 14728527.4
(22) Anmeldetag: 03.06.2014
(51) Int. Cl.: C08G 101/00, C08G 18/61, C08G 18/73, C08G 18/12, C08G 18/32, C08G 18/48, C08G 18/72, C08G 18/76, C08G 18/79, C08G 18/09, C08G 18/22, C08J 9/12

(54) **ELASTISCHER HARTSCHAUMSTOFF MIT VERBESSERTER TEMPERATURSTABILITÄT**
ELASTIC HARD FOAM WITH IMPROVED TEMPERATURE STABILITY
MOUSSE DURE ÉLASTIQUE AYANT UNE MEILLEURE STABILITÉ EN TEMPÉRATURE

(30) Priorität: 07.06.2013 EP 13171106
(43) Veröffentlichungstag der Anmeldung: 13.04.2016
(73) Patentinhaber: Covestro Deutschland AG, 51373 Leverkusen (DE)
(72) Erfinder: ALBACH, Rolf, 51061 Köln (DE); BEAUJEAN, Jörn, 51375 Leverkusen (DE); LOOF, Dirk, 40764 Langenfeld (DE)
(74) Vertreter: Levpat
(86) Internationale Anmeldenummer: PCT/EP2014/061411
(87) Internationale Veröffentlichungsnummer: WO 2014/195275

(56) Entgegenhaltungen:
- EP-A1- 2 457 748
- WO-A1-2013/117541
- DE-A1- 19 924 802
- US-A1- 2009 124 718

## Beschreibung

Die Erfindung betrifft kaltverformbare, temperaturstabile Hartschaumstoffe mit einer Dichte von 10 bis 100 kg/m³ (gemäß DIN 53420), mit einer Bruchdehnung (gemäß DIN 53430) von 12 bis 35%, einer Offenzelligkeit (gemäß DIN ISO 4590-86) von 51% bis 98% sowie einem Speichermodul des Schaumstoffs (nach DIN EN ISO 6721 B:1996-12) im Temperaturbereich von 160° bis 190°C von im Mittel größer oder gleich 0,1 MPa und damit hergestellte Verbundwerkstoffe.

Offenzellige Polyisocyanurat(PIR)-Hartschaumstoffe sind gut bekannt als Kernlagen für Vakuumisolationspaneele. Hierbei kommt es vor allem auf große Druckfestigkeit an. Elastizität ist nicht erwünscht. US-A 5977197 beispielsweise lehrt, dass offenzelliger Polyurethanschaumstoff bevorzugt zu komprimieren und zu evakuieren sei, um ihn als Vakuumpaneel zu nutzen. US-A 5260344 beschreibt offenzellige PIR Schaumstoffe mit einem NCO/OH-Verhältnis von 3,5 bis 13 unter Verwendung brennbarer bzw. halogenierter Kohlenwasserstoffe. Es hat sich gezeigt, dass zur Herstellung solcher offenzelliger Hartschaumstoffe spezielle Prepolymere notwendig sind. In US-A 6433032 wird darauf hingewiesen, dass zur Herstellung geeigneter Prepolymerer die Nutzung von Polyalkylenoxiden mit Ethylenoxidgehalten von 10 bis 50 Gew.-% notwendig sind. US-A 5490224 beschreibt, dass siloxanhaltige Polyole mit mindestens 2 primären oder sekundären Amingruppen oder Hydroxylgruppen zur Herstellung offenzelliger PIR-Schaumstoffe gut geeignet sind, wenn mindestens 10 Gew.-% Siloxangruppen in der Mischung enthalten sind.

US-A 5312848 beschreibt die Herstellung offenzelliger PIR Schaumstoff-Laminate mit einer Offenzelligkeit von > 50% und mit einem NCO/OH-Verhältnis von >1,5 unter Verwendung aromatischer Polyesterpolyole und Polyisocyanate zur Herstellung von Dachhimmeln. In den Beispielen werden Chlorfluoralkane als Treibmittel eingesetzt, die heute in Europa nicht mehr eingesetzt werden dürfen.

Aufgabe war es, einen kaltverformbaren, temperaturstabilen Hartschaumstoff mit einer Dichte unter 120 kg/m³ (nach DIN 53420) und mit guter akustischer Absorption bereitzustellen, der auch oberhalb von 150°C, z. B. im Bereich eines Verbrennungsmotors, noch stabil ist.

Diese Aufgabe konnte durch die nachfolgend näher beschriebenen Polyisocyanurat (PIR)-Hartschaumstoffe gelöst werden.

Gegenstand der Erfindung sind kaltverformbare, temperaturstabile Polyisocyanurat (PIR)-Hartschaumstoffe mit einer Dichte von 10 bis 100 kg/m³, bevorzugt von 10 bis 50 kg/m³ (gemäß DIN 53420), mit einer Bruchdehnung (gemäß DIN 53430) von 12 bis 35%, einer Offenzelligkeit (gemäß DIN ISO 4590-86) von 51% bis 98% und einem Speichermodul des PIR-Hartschaumstoffs (nach DIN EN ISO 6721 B:1996-12) im Temperaturbereich von 160° bis 190°C von im Mittel größer oder gleich 0,1 MPa, bevorzugt von 0,1 bis 2 MPa, dadurch gekennzeichnet, dass der Polyisocyanurat-Hartschaumstoff das Reaktionsprodukt ist aus den Komponenten bestehend aus
A) einer Polyolkomponente A) bestehend aus
   a. 30 bis 95% Gew.-%, bevorzugt 75 bis 95 Gew.-%, bezogen auf die Polyolkomponente A), eines oder mehrerer Polyalkylenoxiden mit einem zahlenmittleren Äquivalentgewicht von 700 bis 2500 g/mol, bevorzugt 900 bis 2100 g/mol und einer zahlenmittleren Funktionalität von 1,8 bis 2,3,
   b. 0,1 bis 4 Gew.-%, bezogen auf die Polyolkomponente A), Polyalkylenoxidmodifizierten Siloxanpolymeren,
   c. gegebenenfalls NCO-reaktiven Komponenten aus der Gruppe bestehend aus Polyalkylenoxiden ausgenommen Komponente a., Polyesterpolyolen, Polycarbonatpolyolen, Polyaminen und Vernetzungsmitteln,
   d. gegebenenfalls Hilfs- und/oder Zusatzmitteln,
   e. Treibmitteln enthaltend mindestens 95 mol%, bezogen auf Treibmittel, Kohlendioxid
   und
B) mindestens einer Isocyanatkomponente B) aus der Gruppe bestehend aus
   i) einer Mischung aus
      a) 75 bis 100 Gew.-%,bezogen auf die Isocyanatkomponente B), 2,4'-Diphenyl-methandiisocyanat, 4,4'-Diphenylmethandiisocyanat und 2,2`-Diphenylmethan-diisocyanat
      b) 0 bis 25 Gew.-%, bezogen auf die Isocyanatkomponente B), Isocyanatverbindungen, die von a) verschieden sind, und
   ii) NCO-Prepolymeren auf Basis
      der Mischung i) aus a) und gegebenenfalls b) und eines oder mehrerer Polyetherpolyole mit einem Anteil an Ethylenoxid von maximal 5 Gew.-% und einer zahlenmittleren Funktionalität von 2 bis 3,
wobei das molare Verhältnis der Isocyanatgruppen aus der Komponente B) zu den Isocyanatreaktiven Gruppen aus der Komponente A) zwischen 1,8 : 1 und 3,0 : 1 liegt.

Die Isocyanatkomponente kann also aus der Mischung i) oder aus den Prepolymeren ii) oder aus einem Gemisch aus der Mischung i) und den Prepolymeren ii) bestehen, wobei das letztgenannte Gemisch besonders bevorzugt ist.

Vorzugsweise werden die Treibmittel e. in einer Menge von 0,1 Gew.-% bis 20 Gew.-%, bezogen auf die Polyolkomponente A), eingesetzt. Die Treibmittel enthalten mindestens 95 mol%, bezogen auf Treibmittel, Kohlendioxid, welches vorzugsweise durch den Einsatz von Wasser und/oder anderen mit Isocyanat CO2-abspaltenden Substanzen erzeugt wird.

Das zahlenmittlere Äquivalentgewicht und die zahlenmittlere Funktionalität der Komponente a. bezieht sich auf die Mischung mehrerer Polyalkylenoxide.

Bevorzugt sind auch PIR-Hartschaumstoffe, bei denen als Isocyanatkomponente B) ein NCO-Prepolymer auf Basis der Mischung aus a) und b) und eines oder mehrerer Polyetherpolyole eingesetzt wird, wobei der Anteil an Ethylenoxid im Polyetherpolyol maximal 5 Gew.-% beträgt und die zahlenmittlere Funktionalität 2 ist. Besonders bevorzugt werden difunktionelle Polyetherpolyole eingesetzt.

Bevorzugt sind PIR-Hartschaumstoffe, bei denen als Isocyanatkomponente B) eine Mischung aus 4,4'-, 2,4'- und 2,2'- Diphenylmethandiisocyanat und deren linearen Derivaten wie Carbodiimide als Komponente a) eingesetzt wird.

Das unter Komponente e. eingesetzte Treibmittel kann bevorzugt aus der Reaktion der Isocyanatkomponente mit Wasser und/oder mit Carbamat stammen.

Die erfindungsgemäßen Polyisocyanurat-Hartschaumstoffe sind besonders als leichte und steife thermoformbare Kernlagen für Verbundwerkstoffe und andere leichte Sandwichstrukturen mit schallabsorbierenden Eigenschaften, besonders bevorzugt Dachhimmel im Automobilbereich geeignet.

Als Komponente a. werden di- und trifunktionelle Polyoxyalkylenpolyole, gegebenenfalls in Abmischung mit tetra- bis hexafunktionellen Polyalkylenpolyolen verwendet, die vorzugsweise durch Umsetzung von Ethylenoxid und/oder Propylenoxid mit zwei- bis sechsfunktionellen Startermolekülen, wie z.B. Glycerin, Trimethylolpropan, Ethylenglycol, Wasser, Propylenglycolen, Neopentylglycol, Bisphenol-A, Bisphenol-F, Tetrabrombisphenol-A, Sorbit, Zuckern und anderen zugänglich sind.

Als weitere Isocyanat-reaktive Komponenten c. können zwei- bis achtfunktionelle, bevorzugt zweibis dreifunktionelle Polyoxyalkylenpolyole mit einem Äquivalentgewicht von 50-400 g/mol isocyanat-reaktiver Funktion verwendet werden, die vorzugsweise durch Umsetzung von Ethylenoxid und/oder Propylenoxid mit Startermolekülen, wie z.B. Glycerin, Trimethylolpropan, Propandiolen, Ethandiol, Triethanolamin, Ethylendiamin, Toluyldiamin, Mischungen aus Zucker und/oder Sorbit mit Glycolen, den Halbestern von Phthalsäure mit Glycolen und anderen zugänglich sind.

Geeignete Polyalkylenoxid-modifizierte Siloxanpolymere b. sind kommerziell von den Firmen Evonik, Air Products, Momentive, Shin-Etsu und anderen im Markt erhältlich. Die Grundlagen der Wirkung dieser Stabilisatoren sind in Silicon Chemistry, September 2006, Volume 3, Seiten 1-10 beschrieben.

Als Komponente d. können die üblichen, aus der Polyurethanchemie an sich bekannten Hilfs- und/oder Zusatzmittel, bevorzugt aus der Gruppe der Katalysatoren, Stabilisatoren, Farbmittel, Emulgatoren, Flammschutzmittel, Zellöffner, Emulgatoren, Reaktionsverzögerer, Stabilisatoren gegen Alterungs- und Witterungseinflüsse, Weichmacher, anorganische, flammhemmende Substanzen, modifizierte Russe, Graphite und weitere Kohlenstoffe, phosphor- und/oder halogenhaltige organische Flammschutzmittel, fungistatisch und bakteriostatisch wirksame Substanzen, Pigmente und Farbstoffe sowie die an sich bekannten, üblichen organischen und anorganischen Füllstoffe eingesetzt werden.

Als Emulgatoren seien beispielsweise ethoxylierte Alkylphenole, Alkalimetallsalze von Fettsäuren, Betaine, Alkalimetallsalze von sulfatierten Fettsäuren, Alkalimetallsalze von Sulfonsäuren und Salze von Fettsäuren und Aminen genannt.

Zu den Katalysatoren gehören beispielsweise Verbindungen, die die Reaktion der reaktive Wasserstoffatome enthaltenden Gruppen, insbesondere Hydroxylgruppen, sowie des Wassers mit den Isocyanaten beschleunigen. In Betracht kommen organische Metallverbindungen, vorzugsweise organische Zinnverbindungen, wie Zinn(II)-salze von organischen Carbonsäuren, beispielsweise Zinn(II)-acetat, Zinn(II)-octoat, Zinn(II)-ethyl-hexanoat, Zinn(II)-laurat und die Dialkylzinn(IV)-salze von organischen Carbonsäuren, beispielsweise Dibutylzinndiacetat, Dibutylzinndilaurat, Dibutylzinnmaleat, Dioctylzinndiacetat, Wismut- und Zinksalze, sowie tertiäre Amine wie Triethylamin, Tributylamin, Dimethylcyclohexylamin, Dimethylbenzylamin, N-Methyl-imidazol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethyl-hexylendiamin-1,6, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-[3,3,0]-octan, 1,4-Diaza-bicyclo-[2,2,2]-octan, und Alkanolaminverbindungen wie Triethanolamin, Tris-isopropanolamin, N-Methyl- und N-Ethyl-diethanolamin und Dimethylethanolamin sowie die entsprechenden Aminoxide. Als Katalysatoren kommen weiter in Betracht: Tris-(dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)-formiat, N,N,N-Trimethyl-N-(2-hydroxy-propyl)-2-ethyl-hexanoat, Tetraalkyl-ammoniumhydroxide wie Tetramethylammoniumhydroxid, Alkalihydroxide wie Natriumhydroxid, Alkalialkoholate wie Natriummethylat und Kaliumisopropylat, sowie Alkali- oder Erdalkalisalze von Carbon- und Fettsäuren mit 1 bis 20 C-Atomen und gegebenenfalls seitenständigen OH-Gruppen.

Bevorzugt werden gegenüber Isocyanaten reaktionsfähige tertiäre Amine, wie beispielsweise N,N-Dimethylaminopropylamin, Bis-(Dimethylaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyl-dipropanolamin, N,N,N'-Trimethyl-N'-hydroxyethyl-bisaminoethyl-ether, N,N-Dimethylaminopropylharnstoff, N-(2-Hydroxypropyl)-imidazol, N-(2-Hydroxyethyl)-imidazol, N-(2-Aminopropyl)-imidazol, 2-((Dimethylamino)ethyl)methylaminopropanol, 1,1'-((3-(Dimethylamino)propyl)imino)bis-2-propanol und/oder die in EP-A 0 629 607 beschriebenen Umsetzungsprodukte aus Acetessigsäureethylester, Polyetherpolyolen und 1-(Dimethylamino)-3-amino-propan verwendet.

Als Stabilisatoren eignen sich beispielsweise Organopolysiloxane, ethoxylierte Fettalkohole und Alkylphenole, Fettsäure-basierte Aminoxide und Betaine, und Ricinusöl- bzw. Ricinolsäureester.

Als Zellöffner wirken beispielweise Paraffine, Polybutadiene, Fettalkohole und gegebenenfalls Polyalkylenoxid-modifizierte Dimethylpolysiloxane.

Bei den Polyisocyanaten b), die in der Isocyanatkomponente B) eingesetzt werden können, handelt es sich vorzugsweise um aliphatische, cycloaliphatische oder aromatische Polyisocyanate. Bevorzugt handelt es sich um bei Raumtemperatur flüssige Polyisocyanate der Diphenylmethanreihe. Gut geeignet sind bei Raumtemperatur flüssige Polyisocyanatgemische der Diphenylmethanreihe, die in an sich bekannter Weise durch Phosgenierung von Anilin/Formaldehyd-Kondensaten zugänglich sind. Auch Harnstoff-, Urethan- und/oder Carbodiimid/Uretdionimingruppen aufweisende Modifizierungsprodukte der Di- und Polyisocyanate der Diphenylmethanisocyanate sind geeignet. Allophanat- bzw. Biuretgruppen aufweisende Modifizierungsprodukte der genannten Di- und Polyisocyanate sind ebenfalls geeignet.

Die Erfindung soll anhand der nachfolgenden Beispiele näher erläutert werden.

### Beispiele:

Die beschriebenen Schaumstoffe wurden hergestellt, indem zunächst in einem Stahlzylinder, der in einer mit Papier ausgekleideten Holzkiste mit einem Volumen von 1*1*1 m³ stand, 10,7 kg der Komponenten der Polyolmischung A gemäß Tabelle1 10 Sekunden gemischt und mit Luft beladen wurden. Anschließend wurde die Isocyanatkomponente gemäß vorgegebener Kennzahl in den Zylinder gegeben. Diese Mischung wurde mit dem gleichen Rührer für 10 Sekunden vermischt. Der Stahlzylinder wurde angehoben, und das Reaktionsgemischt verteilte sich über den Boden der Holzkiste.

Die in der Tabelle angegebene "Startzeit" beschreibt den Zeitpunkt - gerechnet ab dem Zeitpunkt der Zugabe des Isocyanates und Beginn der Vermischung , zu dem die Reaktion von Isocyanat mit dem Wasser in Mischung A in einem so großen Ausmaß reagiert, dass eine Expansion durch das entstandene CO₂ sichtbar wird.

Die in der Tabelle angegebene "Fadenziehzeit" bezeichnet den Zeitpunkt, zu dem man - gerechnet ab dem Zeitpunkt der Zugabe des Isocyanates und Beginn der Vermischung - man mit einem Streichholz erstmals aus dem Schaumstoff Fäden ziehen kann.

Nach weiteren zwei Minuten wurde der Schaumstoff aus der Form entnommen und 24 Stunden bei Raumtemperatur gelagert. Dann wurde aus dem Kern des Schaumstoffes ein Würfel mit einer Kantenlänge von 0,1 m zur Bestimmung der Rohdichte geschnitten. Die Prüfkörper für die Messungen nach DIN EN ISO 6721 B:1996-12 wurden aus dem Schaumstoff direkt oberhalb des oben genannten zentralen Würfels herausgeschnitten. Prüfkörper für die Bestimmung der akustischen Absorption im Kundt'schen Rohr wurden aus dem Schaumstoff in drei verschiedenen Ebenen des zentralen Bereichs entnommen.

**Tabelle 1:**

| | Erfindung | Vergleich | |
|---|---|---|---|
| **Polyolmischung A** | | | |
| Propylenglycol-gestartetes Polyalkylenoxid (Äquivalentgewicht 2000 g/mol) | 81,4 | 15,2 | Gewichtsteile |
| Glyzerin-gestartetes Polyalkylenoxid (Äquivalentgewicht 2000 g/mol) | | 15,0 | |
| Phthalsäureanhydrid/Diethylenglycol-gestartetes Polyethylenoxid (Äquivalentgewicht 180 g/mol) | 10,1 | 5,0 | Gewichtsteile |
| Polypropylenglycol (Äquivalentgewicht 110 g/mol) | | 29,4 | Gewichtsteile |
| Trimethylolpropan-gestartetes Polypropylenglycol (Äquivalentgewicht 100 g/mol) | | 29,7 | Gewichtsteile |
| Wasser | 4,3 | 3,9 | Gewichtsteile |
| Isopur Schwarzpaste N (Firma ISL-Chemie) | 1,0 | 1,0 | Gewichtsteile |
| Polyether-modifiziertes Polysiloxan | 0,2 | 0,2 | Gewichtsteile |
| Kaliumacetat (25 Gew.-% in Diethylenglycol) | 2,5 | | Gewichtsteile |
| Umsetzungsprodukt aus 1 mol Dimethylaminopropylamin und 2 mol Propylenoxid | | 0,6 | Gewichtsteile |
| Umsetzungsprodukt aus 1 mol Dimethylaminopropylamin und 1 mol Ölsäure | 0,5 | | Gewichtsteile |
| OH-Zahl der Polyolmischung | 74 | 363 | mg KOH/g |
| | | | |

| **Isocyanatkomponente B** | | | |
|---|---|---|---|
| 2,2'-MDI | | 3 | Gewichtsteile |
| 2,4'-MDI | 40,0 | 20 | Gewichtsteile |
| 4,4'-MDI | 42,0 | 46 | Gewichtsteile |
| Höhere Homologe des MDI | 0 | 31 | Gewichtsteile |
| Carbodiimid / Uretdionimin | 2,5 | | Gewichtsteile |
| Polypropylenglycol (2000 g/mol) | 15,5 | | Gewichtsteile |
| | | | |
| Kennzahl | 237 | 117 | |
| Startzeit | 35 | 39 | Sekunden |
| Fadenziehzeit | 154 | 199 | Sekunden |
| Rohdichte (DIN 53420) | 39 | 32 | kg/m³ |
| Bruchdehnung (DIN 53430) | 19% | 18% | |
| Offenzelligkeit (DIN ISO 4590-86) | 94% | 78% | |
| Speichermodul (DIN EN ISO 6721 B:1996-12) bei 132°C | 0,50 | 0,50 | MPa |
| Speichermodul (DIN EN ISO 6721 B:1996-12) bei 155°C | 0,47 | 0,08 | MPa |
| Speichermodul (DIN EN ISO 6721 B:1996-12) bei 175°C | 0,42 | 0,01 | MPa |
| Speichermodul (DIN EN ISO 6721 B:1996-12) bei 200°C | 0,32 | 0,01 | MPa |
| Akustische Absorption Mittelwert 315-6350 Hz (DIN EN ISO 10534, Unten-Mitte-Oben) | 30%-32%-31% | | |

Wie der Tabelle 1 zu entnehmen ist, weist der Schaumstoff aus dem erfindungsgemäßen Beispiel eine für gute akustische Absorber vorteilhafte Offenzelligkeit und eine für die Verarbeitung notwendige gute Bruchdehnung auf. Außerdem sind die mechanischen Eigenschaften bei hohen Temperaturen sind stabiler als bei anderen offenzelligen Hartschaumstoffen mit vergleichbarer Bruchdehnung.

## Patentansprüche

1. Kaltverformbare, temperaturstabile Polyisocyanurat-Hartschaumstoffe mit einer Dichte von 10 bis 100 kg/m³ (gemäß DIN 53420), mit einer Bruchdehnung (gemäß DIN 53430) von 12 bis 35%, einer Offenzelligkeit (gemäß DIN ISO 4590-86) von 51% bis 98% und einem Speichermodul des Polyisocyanurat-Hartschaumstoffs (nach DIN EN ISO 6721 B:1996-12) im Temperaturbereich von 160° bis 190°C von im Mittel größer oder gleich 0,1 MPa, **dadurch gekennzeichnet, dass** der Polyisocyanurat-Hartschaumstoff das Reaktionsprodukt ist aus den Komponenten bestehend aus
A) einer Polyolkomponente A) bestehend aus
a. 30 bis 95% Gew.-%, bezogen auf die Polyolkomponente A), eines oder mehrerer Polyalkylenoxiden mit einem zahlenmittleren Äquivalentgewicht von 700 bis 2500 g/mol und einer zahlenmittleren Funktionalität von 1,8 bis 2,3,
b. 0,1 bis 4 Gew.-%, bezogen auf die Polyolkomponente A), Polyalkylenoxid-modifizierte Siloxanpolymeren,
e. Treibmitteln enthaltend mindestens 95 mol%, bezogen auf Treibmittel, Kohlendioxid
und
B) mindestens einer Isocyanatkomponente B) aus der Gruppe bestehend aus
i) einer Mischung aus
a) 75 bis 100 Gew.-%,bezogen auf die Isocyanatkomponente B), 2,4'-Diphenylmethandiisocyanat, 4,4'-Diphenylmethandiisocyanat und 2,2'-Diphenylmethandiisocyanat,
b) 0 bis 25 Gew.-%, bezogen auf die Isocyanatkomponente B), Isocyanatverbindungen, die von a) verschieden sind, und
ii) NCO-Prepolymeren auf Basis
der Mischung i) und eines oder mehrerer Polyetherpolyole mit einem Anteil an Ethylenoxid von maximal 5 Gew.-% und einer zahlenmittleren Funktionalität von 2 bis 3,
wobei das molare Verhältnis der Isocyanatgruppen aus der Komponente B) zu den Isocyanatreaktiven Gruppen aus der Komponente A) zwischen 1,8 : 1 und 3,0 : 1 liegt.

2. Kaltverformbare, temperaturstabile Polyisocyanurat-Hartschaumstoffe gemäß Anspruch 1, **dadurch gekennzeichnet, dass** die Polyolkomponente A)
c. NCO-reaktive Komponenten aus der Gruppe bestehend aus Polyalkylenoxiden ausgenommen Komponente a., Polyesterpolyolen, Polycarbonatpolyolen, Polyaminen und Vernetzungsmitteln, enthält.

3. Kaltverformbare, temperaturstabile Polyisocyanurat-Hartschaumstoffe gemäß Anspruch 1 oder 2, **dadurch gekennzeichnet, dass** die Polyolkomponente A)
d. Hilfs- und/oder Zusatzmittel enthält.

4. Verwendung der Hartschaumstoffe gemäß einem oder mehreren der Ansprüche 1 bis 3 als leichte und steife thermoformbare Kernlagen für Verbundwerkstoffe und leichte Sandwichstrukturen mit schallabsorbierenden Eigenschaften.

## Claims

1. Cold-formable, thermally stable, rigid polyisocyanurate foams having a density of 10 to 100 kg/m³ (as determined in accordance with DIN 53420), a breaking extension (as determined in accordance with DIN 53430) of 12 to 35%, an open-cell content (as determined in accordance with DIN ISO 4590-86) of 51% to 98% and a storage modulus for the rigid polyisocyanurate foam (as determined in accordance with DIN EN ISO 6721 B:1996-12) in the temperature range from 160° to 190°C of on average not less than 0.1 MPa, **characterized in that** the rigid polyisocyanurate foam is the reaction product of the components consisting of
A) a polyol component A) consisting of
a. 130 to 95 wt%, based on said polyol component A), of one or more polyalkylene oxides having a number average equivalent weight of 700 to 2500 g/mol and a number average functionality of 1.8 to 2.3,
b. 10.1 to 4 wt%, based on said polyol component A), of polyalkylene oxide-modified siloxane polymers,
e. blowing agents comprising not less than 95 mol%, based on blowing agent, of carbon dioxide,
and
B) at least one isocyanate component B) from the group consisting of
i) a mixture of
a) 75 to 100 wt%, based on said isocyanate component B), of 2,4'-diphenylmethane diisocyanate, 4,4`-diphenylmethane diisocyanate and 2,2'-diphenylmethane diisocyanate,
b) 0 to 25 wt%, based on said isocyanate component B), of isocyanate components other than a), and
ii) NCO prepolymers based on
said mixture i) and one or more polyether polyols having an ethylene oxide content of not more than 5 wt% and a number average functionality of 2 to 3,
wherein the molar ratio between the isocyanate groups from said component B) and the isocyanate-reactive groups from said component A) is between 1.8:1 and 3.0:1.

2. Cold-formable, thermally stable, rigid polyisocyanurate foams according to Claim 1, **characterized in that** the polyol component A) contains
c. NCO-reactive components from the group consisting of polyalkylene oxides other than component a., polyester polyols, polycarbonate polyols, polyamines and crosslinking agents.

3. Cold-formable, thermally stable, rigid polyisocyanurate foams according to Claim 1 or 2, **characterized in that** the polyol component A) contains
d. auxiliary and/or addition agents.

4. Use of the rigid foams according to one or more of Claims 1 to 3 as lightweight and stiff thermoformable corestock plies for composited engineering materials and lightweight sandwich structures having sound-absorbing properties.

## Revendications

1. Mousses rigides de polyisocyanurate thermostables, formables à froid, ayant une densité de 10 à 100 kg/m³ (selon DIN 53420, ayant un allongement à la rupture (selon DIN 53430) de 12 à 35 %, une proportion de cellules ouvertes (selon DIN ISO 4590-86) de 51 % à 98 % et un module de conservation de forme de la mousse rigide de polyisocyanurate (selon DIN EN ISO 6721 B:1996-12) dans la plage de température de 160° à 190 °C en moyenne supérieur ou égal à 0,1 MPa, **caractérisées en ce que** la mousse rigide de polyisocyanurate est le produit de réaction des composants consistant en
A) un composant polyol A) constitué
a. de 30 à 95 % en poids, par rapport au composant polyol A), d'un ou de plusieurs polyoxyalkylènes ayant un poids équivalent moyen en nombre de 700 à 2 500 g/mole et une fonctionnalité moyenne en nombre de 1,8 à 2,3,
b. de 0,1 à 4 % en poids, par rapport au composant polyol A), de polymères siloxane modifiés avec un polyoxyalkylène,
e. d'agents porogènes contenant au moins 95 % en moles, par rapport aux agents porogènes, de dioxyde de carbone
et
B) d'au moins un composant isocyanate B) choisi dans le groupe constitué par
i) un mélange de
a) 75 à 100 % en poids, par rapport au composant isocyanate B), de 2,4'-diphényl-méthanediisocyanate, 4,4'-diphénylméthane-diisocyanate et 2,2'-diphénylméthane-diisocyanate,
b) 0 à 25 % en poids, par rapport au composant isocyanate B), de composés isocyanate qui sont différents de a), et
ii) des NCO-prépolymères à base
du mélange i) et d'un ou de plusieurs polyétherpolyols ayant une teneur en oxyde d'éthylène d'au maximum 5 % en poids et une fonctionnalité moyenne en nombre de 2 à 3,
le rapport molaire des groupes isocyanate provenant du composant B) aux groupes réactifs avec des isocyanates, provenant du composant A), étant compris entre 1,8 : 1 et 3,0 : 1.

2. Mousses rigides de polyisocyanurate thermostables, formables à froid, selon la revendication 1, **caractérisées en ce que** le composant polyol A) contient
c. des composants réactifs avec NCO, choisis dans le groupe constitué par des polyoxyalkylènes à l'exclusion du composant a., des polyesterpolyols, des polycarbonate-polyols, des polyamines et des agents de réticulation.

3. Mousses rigides de polyisocyanurate thermostables, formables à froid, selon la revendication 1 ou 2, **caractérisées en ce que** le composant polyol A) contient
d. des adjuvants et/ou additifs.

4. Utilisation des mousses rigides selon une ou plusieurs des revendications 1 à 3, en tant que couches d'âme thermoformables légères et rigides pour des matériaux composites et des structures légères en sandwich à propriétés absorbant les sons.
